# EUROPÄISCHE PATENTSCHRIFT

(11) **EP 1 146 960 B1**
(45) Veröffentlichungstag und Bekanntmachung des Hinweises auf die Patenterteilung: **17.09.2003**
(21) Anmeldenummer: 00903595.7
(22) Anmeldetag: 20.01.2000
(51) Int. Cl.: B01J 38/06

(54) **VERFAHREN ZUR AUFARBEITUNG VON pTHF-POLYMERISATIONSKATALYSATOREN**
METHOD FOR PROCESSING pTHF POLYMERIZATION CATALYSTS
PROCEDE DE REGENERATION DE CATALYSEURS DE POLYMERISATION DE pTHF

(30) Priorität: 20.01.1999 DE 19902093
(43) Veröffentlichungstag der Anmeldung: 24.10.2001
(73) Patentinhaber: BASF AKTIENGESELLSCHAFT, 67056 Ludwigshafen (DE)
(72) Erfinder: MENGER, Volkmar, D-67434 Neustadt (DE); ELLER, Karsten, D-67061 Ludwigshafen (DE); MEIER, Anton, D-67134 Birkenheide (DE); HESSE, Michael, D-67549 Worms (DE)
(74) Vertreter: Isenbruck, Günter, Dr.
(86) Internationale Anmeldenummer: EP0000432
(87) Internationale Veröffentlichungsnummer: WO00043124

(56) Entgegenhaltungen:
- US-A- 5 202 295
- US-A- 5 268 345
- DATABASE CHEMABS [Online] CHEMICAL ABSTRACTS SERVICE, COLUMBUS, OHIO, US INOOKA, MASAYOSHI ET AL: "Treatment of heavy oils" retrieved from STN Database accession no. 91:143103 CA XP002137032 -& JP 54 033503 A (CHIYODA CHEMICAL ENGINEERING AND CONSTRUCTION CO., LTD., JAPAN) 12. März 1979 (1979-03-12)

## Beschreibung

Die Erfindung betrifft ein Verfahren zur Aufarbeitung von zumindest teilweise desaktivierten Polymerisationskatalysatoren sowie die Verwendung der aufgearbeiteten Polymerisationskatalysatoren.

Es ist bekannt, Schichtsilikate wie Smectite, Kaolin und Attapulgit als Polymerisationskatalysatoren für die Polymerisation von Tetrahydrofuran (THF) zu Polytetrahydrofuran (pTHF) einzusetzen, wobei die Polymerisation in Gegenwart von Telogenen durchgeführt werden kann. So wird beispielsweise der zur Klasse der Smectite gehörende Montmorillonit für die Polymerisation von THF in Gegenwart von Acetanhydrid als Telogen zu pTHF-Diacetat eingesetzt. Durch Co-Polymerisation von THF mit Ethylenoxid oder Propylenoxid, beispielsweise mit Kaolin oder Attapulgit als Katalysatoren, werden Polybutylenalkylenglykolether erhalten.

Mit zunehmender Dauer ihres Einsatzes als Polymerisationskatalysatoren verlieren die Schichtsilikate an katalytischer Aktivität und müssen schließlich ausgewechselt werden. Das Auswechseln des gebrauchten, desaktivierten Katalysators ist jedoch mit einer aufwendigen Reinigungsprozedur verbunden, durch die der gebrauchte Katalysator von anhaftenden Produkten der Polymerisationsreaktion befreit wird. Der Reinigungsprozeß ist u.a. notwendig, um die Rieselfähigkeit der Katalysatorschüttung wiederherzustellen, so daß der Katalysator problemlos durch Absaugen aus dem Polymerisationsreaktor entfernt werden kann. Dabei wird üblicherweise so vorgegangen, daß der gebrauchte, mit hochviskosem pTHF-Diacetat verunreinigte Katalysator beispielsweise wie in der US-A 5,268,345 beschrieben mit Wasser und Methanol gewaschen wird. Um den Katalysator von anhaftendem Extraktionsmittel zu befreien, muß vor dem Absaugen der Katalysatorschüttung diese noch mehrmals mit Wasser gespült werden. Dabei fallen große Mengen an Spülwasser an, die mit dem Extraktionsmittel belastet sind. Die beschriebene Reinigungsprozedur ist zeitaufwendig und kostenintensiv. Die angefallenen großen Mengen an lösungsmittelhaltigem Spülwasser müssen aufgearbeitet werden. Der ausgebaute Katalysator ist in der Regel auch nach dieser Reinigungsprozedur noch so stark mit Lösungsmittel belastet, daß er die für eine Deponierung des Katalysators in Deutschland vorgeschriebenen Schadstoff-Grenzwerte nicht erreicht und verbrannt werden muß.

Aufgabe der Erfindung ist es, ein Verfahren zur Aufarbeitung von gebrauchten Polymerisationskatalysatoren für die Polymerisation von THF bereit zu stellen, das einen schnellen und kostengünstigen Katalysatorwechsel erlaubt, und bei dem ein aufbereiteter Katalysator erhalten wird, der von Schadstoffen weitgehend befreit ist und deponiert werden kann.

Gelöst wurde die Aufgabe durch ein Verfahren zur Aufarbeitung von zumindest teilweise desaktivierten Polymerisationskatalysatoren für die Polymerisation oder Co-Polymerisation von THF, die mit den Produkten der Polymerisation bzw. Co-Polymerisation von THF verunreinigt sind, bei dem der Polymerisationskatalysator durch Behandlung mit Wasserdampf bei einer Temperatur von im allgemeinen 80 bis 250 °C, bevorzugt 100 bis 200°C und einem Absolutdruck von im allgemeinen 0,5 bis 40 bar, bevorzugt 1 bis 16 bar gereinigt wird. Der gereinigte Polymerisationskatalysator kann in einem zweiten Schritt deponiert, regeneriert, in sonstiger Weise verwendet oder verbrannt werden. In sonstiger Weise verwendet wird der gereinigte Polymerisationskatalysator beispielsweise zur Depolymerisation von nicht spezifikationsgerechtem pTHF.

Vorzugsweise wird der gereinigte Polymerisationskatalysator regeneriert. Bevorzugt ist also ein Verfahren zur Aufarbeitung von Polymerisationskatalysatoren mit mindestens zwei Schritten, bei dem
(a) in einem ersten Schritt der Polymerisationskatalysator in der vorstehend beschriebenen Weise gereinigt wird, und
(b) der gereinigte Polymerisationskatalysator regeneriert wird.

Das erfindungsgemäße Verfahren wird zur Aufarbeitung von zumindest teilweise desaktivierten Polymerisationskatalysatoren für die Polymerisation oder Co-Polymerisation von THF eingesetzt. Teilweise desaktiviert ist der Polymerisationskatalysator dann, wenn er seine ursprüngliche katalytische Aktivität verloren hat und/oder wenn die Farbzahl des Polymerisats die Spezifikationsgrenze überschreitet. Ein teilweise desaktivierter Polymerisationskatalysator kann beispielsweise noch eine Restaktivität von 80 % der ursprünglichen Aktivität aufweisen. Es können Polymerisationskatalysatoren aufgearbeitet werden, die für die Polymerisation von THF zu pTHF oder für die Co-Polymerisation von THF mit Alkylenoxiden, wie Ethylenoxid oder Propylenoxid, zu den entsprechenden Polybutylenalkylenglykolethern eingesetzt wurden, wobei sowohl die Polymerisation als auch die Co-Polymerisation in Gegenwart von Telogenen durchgeführt worden sein kann. Telogenen sind beispielsweise Wasser, ein- und mehrwertige Alkohole wie Methanol, Ethanol, Propanol, Ethylenglykol, Butylenglykol, Glycerin, Neopentylglykol, 1,4-Butandiol, femer aliphatische Carbonsäuren mit 1 bis 8 C-Atomen, wie Ameisensäure, Essigsäure, Propionsäure, Buttersäure, und aromatische Carbonsäuren wie Benzoesäure, sowie deren Anhydride.

Die zumindest teilweise desaktivierten Polymerisationskatalysatoren sind mit den Produkten der Polymerisation bzw. Co-Polymerisation verunreinigt. Produkte der Polymerisation bzw. Co-Polymerisation sind pTHF, Polybutylenalkylenglykolether bzw. deren Reaktionsprodukte mit den genannten Telogenen.

Vorzugsweise wird das erfindungsgemäße Verfahren zur Aufarbeitung von Polymerisationskatalysatoren auf der Basis von Silikaten eingesetzt. Polymerisationskatalysatoren auf der Basis von Silikaten sind natürlich vorkommende oder künstlich hergestellte Schichtsilikate, wie die natürlich vorkommenden Smectite, insbesondere Natrium- oder Kalziummontmorillonit, ferner Kaolin, Attapulgit und Sepiolit. Polymerisationskatalysatoren auf der Basis von Silikaten sind auch Zeolithe. Die genannten Silikate, bzw. Schichtsilikate werden üblicherweise durch Behandlung mit Säuren aktiviert und anschließend kalziniert. Durch die Säurebehandlung werden in den Tonmineralien durch Ionenaustausch saure Zentren geschaffen und/oder die Oberfläche des Katalysators vergrößert. Einige Mineralien, wie Attapulgit und Sepiolit, weisen auch ohne Säurebehandlung in ausreichendem Maße saure Zentren auf. Saure Zentren können auch durch Kalzinierung von Ammoniumverbindungen der betreffenden Mineralien erhalten werden.

In einer bevorzugten Ausführungsform des erfindungsgemäßen Verfahrens werden Polymerisationskatalysatoren für die Polymerisation oder Co-Polymerisation von THF auf der Basis von Schichtsilikaten, insbesondere von säureaktiviertem Montmorillonit aufgearbeitet. Insbesondere werden solche Polymerisationskatalysatoren für die Polymerisation von THF in Gegenwart von Acetanhydrid als Telogen zu pTHF-Diacetat aufgearbeitet. Letztere sind hauptsächlich mit pTHF-Diacetat verunreinigt.

In einem ersten Schritt des erfindungsgemäßen Verfahrens wird der Polymerisationskatalysator mit Wasserdampf bei einer Temperatur von 80 bis 250°C, bevorzugt von 100 bis 200°C und einem Absolutdruck von 0,5 bis 40 bar, bevorzugt von 1 bis 16 bar, behandelt. Dazu kann der gebrauchte Polymerisationskatalysator in dem Polymerisationsreaktor belassen werden und, ggf. nach Ablassen der Reaktionsmischung, auf den Polymerisationsreaktor Wasserdampf aufgegeben werden. Bei der angegebenen Temperatur und dem angegebenen Druck kommt es zur hydrolytischen Spaltung der Polymermoleküle in niedermolekularen Einheiten, welche ohne weiteres durch den Wasserdampf aus dem Polymerisationskatalysator herausgelöst und abtransportiert werden. Beispielsweise kommt es bei mit pTHF-Diacetat verunreinigten Polymerisationskatalysatoren zur Hydrolyse unter Abspaltung von Essigsäure und anschließender Depolymerisation von pTHF zu THF und THF-Oligomeren. Durch die hydrolytische Spaltung und Depolymerisation des hochviskosen pTHF wird die Rieselfähigkeit des Polymerisationskatalysators wieder hergestellt, so daß dieser problemlos aus dem Polymerisationsreaktor entfernt werden kann. Es können auf diese Weise beliebige Katalysatorschüttungen in beliebigen Reaktionsapparaten aufbereitet werden. Beispielsweise kann der Katalysator in Form von Split, Strängen, Kugeln oder sonstigen Formkörpern vorliegen. Der gereinigte Katalysator kann beispielsweise durch Absaugen aus dem Polymerisationsreaktor oder durch Ablassen nach unten entfernt werden.

Durch die Wasserdampfbehandlung werden die Polymerisationskatalysatoren soweit gereinigt, daß die organischen Bestandteile, gemessen als Glühverlust des Trockenrückstandes, weniger als 10 Gew.-% betragen und der TOC-Gehalt (total organic carbon) im Eluat des wasserdampfbehandelten Katalysators < 200 mg/l ist. Organische Bestandteile sind das Polymerisationsprodukt sowie deren oligomeren bzw. monomeren Abbauprodukte, beispielsweise pTHF-Diacetat, pTHF, oligomere Butylenether, THF und 1,4-Butandiol. Beispielsweise kann in Schritt (a) eine Behandlungszeit von 24 h bis 96 h ausreichend sein, um den Gehalt der Polymerisationskatalysatoren an organischen Bestandteilen auf < 10 Gew.-% Glühverlust und < 200 mg/l TOC im Eluat zu verringern. Vorzugsweise beträgt die Behandlungszeit 30 h bis 70 h, wobei die Behandlungszeit abhängig von der Reaktorgröße ist und dementsprechend auch viel größer oder viel kleiner sein kann.

In einer Ausführungsform des erfindungsgemäßen Verfahrens wird der gereinigte Polymerisationskatalysator anschließend deponiert. Durch den geringen Gehalt der Polymerisationskatalysatoren an organischen Bestandteilen, insbesondere an löslichen organischen Bestandteilen wie THF, kann dieser deponiert werden und muß nicht verbrannt werden. Gereinigte Polymerisationskatalysatoren, die deponiert werden, weisen vorzugsweise einen Gehalt an organischen Bestandteilen von < 10 Gew.-% Glühverlust des Trockenrückstandes und < 200 mg/l TOC im Eluat auf.

Der gereinigte Polymerisationkatalysator kann auch zur Depolymerisation von pTHF verwendet werden. Vorzugsweise handelt es sich bei letzterem um nicht spezifikationsgerechtes pTHF mit einer anderen als der gewünschten Molmasse.

Vorzugsweise wird jedoch in einem zweiten Schritt (b) der gereinigte Polymerisationskatalysator regeneriert.

Regeneriert wird der gereinigte Polymerisationskatalysator durch Kalzinieren in einer sauerstoffhaltigen Atmosphäre bei einer Temperatur > 200°C. Gereinigte Polymerisationskatalysatoren, die regeneriert werden, weisen vorzugsweise einen Gehalt an organischen Bestandteilen von < 5 Gew.-% Glühverlust des Trockenrückstandes auf. Die Kalzinierung wird vorzugsweise bei einer Temperatur von 400 bis 800°C, besonders bevorzugt von 450 bis 600°C durchgeführt. Kalzinierungstemperaturen unterhalb 200°C reichen im allgemeinen nicht aus, um die nach der Dampfbehandlung (Schritt (a)) noch vorhandenen organischen Bestandteile zu entfernen. Kalzinierungstemperaturen oberhalb 800°C bewirken im allgemeinen eine Veränderung der Katalysatoreigenschaften, so daß dieser nach der Regenerierung nicht mehr die ursprüngliche Aktivität aufweist. Die Dauer der Kalzinierung richtet sich sowohl nach der Menge der noch in dem Katalysator enthaltenen organischen Bestandteile als auch nach der Kalzinierungstemperatur. Im allgemeinen wird eine Kalzinierungszeit von 0,5 bis 24 h ausreichend sein. Bevorzugt beträgt die Kalzinierungszeit von 0,5 bis 10 h, besonders bevorzugt von 0,7 bis 5 h.

Der Katalysator wird in einer sauerstoffhaltigen Atmosphäre kalziniert. Die Kalzinierung kann beispielsweise an der Luft durchgeführt werden. Es kann aber auch die Kalzinierung in einer Inertgasatmosphäre aus z.B. Stickstoff begonnen werden und dieser in steigendem Maße Sauerstoff oder Luft zugemischt werden. Dadurch kann eine zu heftige Verbrennung der oxidierbaren organischen Bestandteile bei der Kalzinierung und eine dadurch bedingte lokale Überhitzung des Katalysators vermieden werden. Die Sauerstoff- bzw. Inertgaszufuhr kann zweckmäßigerweise über eine Temperaturmessung gesteuert werden.

Die Kalzinierung der Polymerisationskatalysatoren kann in den üblicherweise verwendeten Kalziniervorrichtungen durchgeführt werden. Beispiele sind Hordenöfen, Schachtöfen, Drehrohröfen oder Bandkalzinierer. Bevorzugt wird die Kalzinierung in Drehrohröfen oder Bandkalzinierern durchgeführt. Es kann auch eine *in-situ* Kalzinierung in dem Polymerisationsreaktor selbst durchgeführt werden. Dadurch kann der Aus- und Einbau des Katalysators zum Zwecke der Regenerierung vermieden werden. Vorzugsweise wird der gereinigte Katalysator mit vorgeheiztem Stickstoff auf die Kalzinierungstemperatur gebracht und durch Zudosierung von Sauerstoff oder Luft regeneriert.

Durch die Kalzinierung wird die Aktivität des Polymerisationskatalysators soweit wieder hergestellt, daß dieser erneut für die Polymerisation oder Co-Polymerisation von THF, vorzugsweise in Gegenwart von Telogenen, wiederverwendet werden kann. Dazu wird der regenerierte Polymerisationskatalysator gegebenenfalls erneut in den Polymerisationsreaktor eingebaut und ggf. in Gegenwart von Telogenen wie Acetanhydrid polymerisiert.

Die Erfindung wird durch das nachfolgenden Beispiel näher erläutert:

### BEISPIEL

In einem Polymerisationsreaktor für die Polymerisation von THF in Gegenwart von Acetanhydrid zu pTHF-Diacetat, bestehend aus einem Reaktionsrohr von 15 cm lichter Weite, wurde die Katalysatorschüttung aus aktivierter Tonerde in Form von 2,5 mm dicken Strängen nach einer Standzeit von 9 Monaten wie folgt aufbereitet: über eine Dampfleitung wurde Wasserdampf von 5 bar absolut und 150°C von oben auf die Katalysatorschüttung aufgegeben. Der Mengenstrom betrug ca. 0,5 kg/h. Nach 69 h wurde eine sehr gut rieselfähige Katalysatorschüttung erhalten, die problemlos abgesaugt werden konnte. Der Glühverlust des gereinigten Katalysators lag zwischen 3 und 6 Gew.-%, als TOC-Gehalte im Eluat wurden Werte zwischen 5 und 30 mg/l gemessen.

Durch die erfindungsgemäße Verfahrensweise konnte der Zeitbedarf für den Katalysatorwechsel halbiert werden. Ferner wurde ein gereinigter Katalysator erhalten, dessen Gehalt an organischen Bestandteilen eine Deponierung erlaubte.

## Patentansprüche

1. Verfahren zur Aufarbeitung von zumindest teilweise desaktivierten Polymerisationskatalysatoren für die Polymerisation oder Co-Polymerisation von THF, die mit den Produkten der Polymerisation bzw. Co-Polymerisation von THF verunreinigt sind, bei dem der Polymerisationskatalysator durch Behandlung mit Wasserdampf bei einer Temperatur von 80 bis 250 °C und einem Absolutdruck von 0,5 bis 40 bar gereinigt wird.

2. Verfahren nach Anspruch 1 mit mindestens zwei Schritten, bei dem
(a) in einem ersten Schritt der Polymerisationskatalysator gereinigt und
(b) in einem zweiten Schritt der gereinigte Polymerisationskatalysator regeneriert wird.

3. Verfahren nach Anspruch 1 oder 2 zur Aufarbeitung von Polymerisationskatalysatoren auf der Basis von Schichtsilikaten.

4. Verfahren nach einem der Ansprüche 1 oder 3 zur Aufarbeitung von Polymerisationskatalysatoren auf der Basis von säureaktivierten Montmorillonit.

5. Verfahren nach einem der Ansprüche 1 bis 4 zur Aufarbeitung von Polymerisationskatalysatoren für die Polymerisation oder Co-Polymerisation von THF in Gegenwart von Telogenen.

6. Verfahren nach einem der Ansprüche 1 bis 5 zur Aufarbeitung von Polymerisationskatalysatoren für die Polymerisation von THF in Gegenwart von Acetanhydrid als Telogen zu pTHF-Diacetat.

7. Verfahren nach einem der Ansprüche 2 bis 6, **dadurch gekennzeichnet, daß** in Schritt (a) der Gehalt der Polymerisationskatalysatoren an organischen Bestandteilen auf< 10 Gew.-% Glühverlust des Trockenrückstandes und < 200 mg/l TOC im Eluat verringert wird.

8. Verfahren nach einem der Ansprüche 2 bis 7, **dadurch gekennzeichnet, daß** der Polymerisationskatalysator in Schritt (b) durch Kalzinieren in einer sauerstoffhaltigen Atmosphäre bei einer Temperatur > 200°C regeneriert wird.

9. Verfahren nach Anspruch 8, **dadurch gekennzeichnet, daß** der Polymerisationskatalysator bei einer Temperatur von 400 bis 800°C während eines Zeitraums von 0,5 bis 24 h kalziniert wird.

## Claims

1. A process for working up at least partially deactivated polymerization catalysts for the polymerization or copolymerization of THF which are contaminated with the products of the polymerization or copolymerization of THF, which comprises cleaning the polymerization catalyst by treatment with steam at from 80 to 250°C and an absolute pressure of from 0.5 to 40 bar.

2. A process as claimed in claim 1 having at least two steps, wherein
(a) in a first step, the polymerization catalyst is cleaned and
(b) in a second step, the clean polymerization catalyst is regenerated.

3. A process as claimed in claim 1 or 2 for working up polymerization catalysts based on sheet silicates.

4. A process as claimed in any of claims 1 to 3 for working up polymerization catalysts based on acid-activated montmorillonite.

5. A process as claimed in any of claims 1 to 4 for working up polymerization catalysts for the polymerization or copolymerization of THF in the presence of telogens.

6. A process as claimed in any of claims 1 to 5 for working up polymerization catalysts for the polymerization of THF in the presence of acetic anhydride as telogen to give pTHF diacetate.

7. A process as claimed in any of claims 2 to 6, wherein, in step (a), the content of organic constituents in the polymerization catalysts is reduced to a value corresponding to a loss on ignition of the dry residue of <10% by weight and a TOC in the eluate of <200 mg/l.

8. A process as claimed in any of claims 2 to 7, wherein the polymerization catalyst is regenerated in step (b) by calcination in an oxygen-containing atmosphere at >200°C.

9. A process as claimed in claim 8, wherein the polymerization catalyst is calcined at from 400 to 800°C for from 0.5 to 24 hours.

## Revendications

1. Procédé destiné au recyclage de catalyseurs de polymérisation au moins partiellement désactivés, pour la polymérisation ou la copolymérisation de THF, qui sont contaminés par les produits de la polymérisation ou de la copolymérisation du THF, dans lequel le catalyseur de polymérisation est purifié au moyen d'un traitement avec de la vapeur d'eau à une température allant de 80°C à 250°C et sous une pression absolue allant de 0,5 bar à 40 bars.

2. Procédé selon la revendication 1 comprenant au moins deux étapes, dans lequel
(a) on purifie, dans une première étape, le catalyseur de polymérisation et
(b) on régénère, dans une deuxième étape, le catalyseur de polymérisation purifié.

3. Procédé selon l'une quelconque des revendications 1 ou 2 destiné au recyclage de catalyseurs de polymérisation à base de phyllosilicates.

4. Procédé selon l'une quelconque des revendications 1 ou 3 destiné au recyclage de catalyseurs de polymérisation à base de montmorillonite activée par un acide.

5. Procédé selon l'une quelconque des revendications 1 à 4 destiné au recyclage de catalyseurs de polymérisation pour la polymérisation ou la copolymérisation de THF en présence de télogènes.

6. Procédé selon l'une quelconque des revendications 1 à 5 destiné au recyclage de catalyseurs de polymérisation pour la polymérisation de THF en présence d'anhydride acétique, en tant que télogène, pour former du diacétate de pTHF.

7. Procédé selon l'une quelconque des revendications 2 à 6, **caractérisé en ce que**, dans l'étape (a), la teneur en composants organiques des catalyseurs de polymérisation est réduite à moins de 10% en poids de perte par calcination du résidu sec et à moins de 200 mg/L de TOC dans l'éluat.

8. Procédé selon l'une quelconque des revendications 2 à 7, **caractérisé en ce que** le catalyseur de polymérisation, dans l'étape (b), est régénéré au moyen d'une calcination sous une atmosphère contenant de l'oxygène à une température supérieure à 200°C.

9. Procédé selon la revendication 8, **caractérisé en ce que** le catalyseur de polymérisation est calciné à une température allant de 400°C à 800°C pendant une durée allant de 0,5 heure à 24 heures.
